# EUROPÄISCHE PATENTSCHRIFT

(11) **EP 0 824 988 B1**
(45) Veröffentlichungstag und Bekanntmachung des Hinweises auf die Patenterteilung: **04.06.2003**
(21) Anmeldenummer: 97112799.8
(22) Anmeldetag: 25.07.1997
(51) Int. Cl.: B23K 20/12

(54) **Vorrichtung zum Schweissen von metallischen Stiften**
Metallic tip welding device
Appareil de soudage de pointes métalliques

(30) Priorität: 20.08.1996 DE 29614419 U
(43) Veröffentlichungstag der Anmeldung: 25.02.1998
(73) Patentinhaber: HILBIG SCHWEISSTECHNIK GmbH, D-21079 Hamburg (DE)
(72) Erfinder: Horn, Helmut, Prof. Dr., 28717 Bremen (DE); Junge, Heiko, 21706 Drochtersen (DE); Knuth, Lars-Ulrich, 21438 Brackel (DE); Hilbig, Siegfried, 4216 Runaway Bay, Queensland (AU)
(74) Vertreter: Patentanwälte Hauck, Graalfs, Wehnert, Döring, Siemons, Schildberg

(56) Entgegenhaltungen:
- WO-A-86/06664
- DE-A- 2 914 383

## Beschreibung

Die Erfindung bezieht sich auf eine Vorrichtung zum Schweißen von metallischen Stiften oder Bolzen nach dem Reibschweißverfahren nach dem Oberbegriff des Patentanspruchs 1.

Insbesondere im Schiffs- und Anlagenbau besteht häufig die Notwendigkeit, Stifte oder Bolzen als Handhabungshilfen und Befestigungselemente an Blechoberflächen anzuschweißen. Das vorwiegend angewendete Verfahren ist das Lichtbogen-Bolzenschweißen, das sich allgemein bewährt hat. In bestimmten Anwendungsfällen weist jedoch dieses Verfahren einige Nachteile auf.

Bolzenschweißverbindungen an Aluminium und Aluminiumlegierungen sind zwar grundsätzlich möglich. Aufgrund der unzureichenden Prozeßsicherheit und der starken Porenneigung wird jedoch eine höhere Bolzenzahl angeschweißt als an sich notwendig wäre. Bestimmte Werkstoffkombinationen wie Aluminiumblech und Stahlbolzen lassen sich nicht verwirklichen. Bei bestimmten korrosionsbeständigen Stählen erfolgt durch den Schweißprozeß eine Gefügeveränderung, die eine Verminderung der Korrosionsbeständigkeit zur Folge haben kann.

Die Anwendung des Reibschweißverfahrens für derartige Fälle ist ebenfalls bekannt. Beim Reibschweißverfahren wird bekanntlich das Werkstück, beispielsweise der Bolzen, mit hoher Geschwindigkeit gedreht unter gleichzeitigem Andrücken an die Montagefläche. Nach einer vorgegebenen Zeit, in der eine Erweichung an der Berührungsfläche stattgefunden hat, wir ein Stauchdruck erzeugt, durch den die Schweißverbindung dann endgültig hergestellt wird. Bei den bekannten Vorrichtungen zur Durchführung des Schweißverfahrens werden quasi stationäre Geräte vorgesehen, und die das Werkstück haltende Spannvorrichtung wird mit Hilfe einer Befestigungshilfe fest mit der Montagefläche verbunden.

Durch die stationäre Ausbildung der Vorrichtung und die Befestigungshilfen ist die Anwendungsmöglichkeit des Reibschweißens stark eingeschränkt.

Aus WO 86/06664 A, das als nächstliegender Stand der Technik angesehen wird, ist ein Bolzenschweißgerät für das Reibschweißverfahren bekannt geworden, das mit einem pneumatischen Motor versehen ist. Das Aufbringen eines Stauchdruckes erfolgt mit Hilfe eines pneumatischen Druckerzeugers.

Der Erfindung liegt die Aufgabe zugrunde, eine einfach aufgebaute und leicht handhabbare Vorrichtung zum Reibschweißen von metallischen Stiften oder Bolzen zu schaffen, die für eine große Anzahl von Anwendungsfällen geeignet ist.

Diese Aufgabe wird durch die Merkmale des Patentanspruchs 1 gelöst.

Bei der erfindungsgemäßen Vorrichtung wird ein z.B. von Hand oder einem Roboter geführtes Gehäuse vorgesehen, das einen hochdrehenden Elektromotor enthält, beispielsweise mit einer Drehzahl von 10.000 oder auch deutlich mehr. So hält z.B. der Bediener das Gehäuse mit der Hand, beispielsweise an geeigneten Griffen und führt den im Spannfutter eingespannten Bolzen gegen die Montagefläche an die vorgegebene Position.

Der Motor ist vorzugsweise fest in dem gegenüber dem geführten Gehäuseteil beweglichen Gehäuseabschnitt angebracht. Es versteht sich, daß dieser Gehäuseabschnitt durch den anderen Gehäuseabschnitt einigermaßen genau geführt ist, um die Positionierung des Stiftes zu gewährleisten.

Im Gehäuse der erfindungsgemäßen Vorrichtung ist ferner ein Stauchdruckerzeuger angeordnet. Dieser ist vorzugsweise auf der der Spannvorrichtung entgegengesetzten Seite des Motors angeordnet. Eine auf der entgegengesetzten Seite wie der Motor angeordnete Zylinderkammer ist als Explosionskammer ausgebildet. Derartige Explosionskammern sind in Verbindung mit Bolzeneintreibgeräten an sich bekannt geworden.

Es versteht sich, daß im Gehäuse eine geeignete Steuerung untergebracht ist, die den Motor nach einer vorgegebenen Zeit abschaltet, in welcher sichergestellt ist, daß eine ausreichende Aufweichung des zu verschweißenden Materials stattgefunden hat. Auch die Steuerung der Erzeugung des Stauchdrucks nach Abschalten des Motors kann von einer geeigneten Steuervorrichtung übernommen werden.

Während des Schweißens ist darauf zu achten, daß der Bolzen oder Stift richtig positioniert ist und zentriert bleibt. Dies kann beispielsweise dadurch geschehen, daß ein angespitzter Stift verwendet wird, der an einer vorher gekörnten Stelle am Blech angesetzt wird. Derartige Stifte, die an sich bekannt sind, weisen aufgrund des Formvorganges einen der Spitze benachbarten Flansch auf. Dieser hat den Vorteil, daß die Verbindungsfläche während des Schweißens vergrößert.

Alternativ können auch geeignete Positioniermittel vorgesehen werden, die seitlich der Spindel sich zu der Montagefläche hin erstrecken und mit dieser haftend in Eingriff bringbar sind. Beispielsweise können die Positioniermittel Haftflächen aufweisen, die mit der Montagefläche in Berührung bringbar sind, um ein seitliches Ausweichen während des Reibvorgangs zu verhindern. In einer anderen Ausstattung der Erfindung können die Positioniermittel Vakuummittel aufweisen zwecks Ansaugens an der Montagefläche. Schließlich können die Positioniermittel gemäß einer anderen Ausgestaltung der Erfindung Magneten aufweisen zur Festlegung an der Montagefläche.

Ausführungsbeispiele der Erfindung werden nachfolgend anhand von Zeichnungen näher erläutert.
Figur 1 zeigt äußerst schematisch eine Ausführungsform einer Vorrichtung nach der Erfindung.
Figur 2 zeigt eine zweite Ausführungsform nach der Erfindung.
Figur 3 zeigt in abgewandelter Form eine Einzelheit der Vorrichtung nach Figur 2.
Figur 4 zeigt eine andere abgewandelte Form einer Einzelheit der Vorrichtung nach Figur 2.

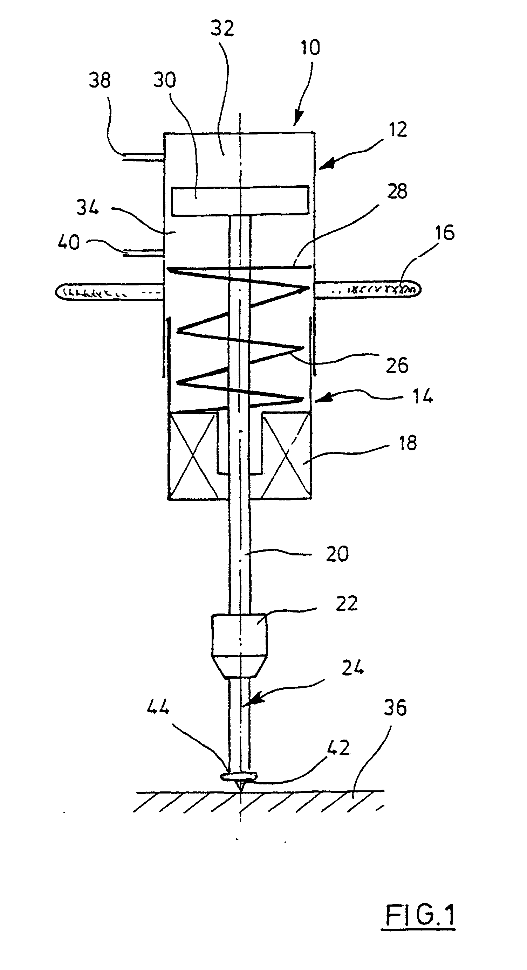

In Figur 1 ist ein Gehäuse 10 zu erkennen, das einen oberen zylindrischen Gehäuseabschnitt 12 und einen unteren zylindrischen Gehäuseabschnitt 14 aufweist, die teleskopisch ineinander geführt sind. Geeignete, nicht gezeigte Vorkehrungen sorgen dafür, daß die Gehäuseabschnitte 12, 14 nicht ungewollt voneinander getrennt werden.

Seitlich am Gehäuseabschnitt 12 sind gegenüberliegend Griffabschnitte 16 vorgesehen.

Im unteren Gehäuseabschnitt 14 ist ein Elektromotor 18 angeordnet, der mit hoher Drehzahl betrieben werden kann, beispielsweise bis zu 20.000 Umdrehungen pro Minute und mehr. Der Motor 18 treibt eine Spindel 20, die sich nach vorn aus dem Gehäuseabschnitt 14 heraus erstreckt und ein Einspannfutter 22 aufweist, das zur Einspannung von Bolzen geeignet ist, wie etwa dem Bolzen 24.

In dem durch die Gehäuseabschnitte 12, 14 gebildeten Raum oberhalb des Motors 18 ist eine Feder 26 angeordnet, die sich einerseits auf dem Motor 18 abstützt und andererseits auf einem Widerlager 28 im Gehäuseabschnitt 12. Dadurch wird der Gehäuseabschnitt 14 vom Gehäuseabschnitt 12 fort vorgespannt, wobei, wie schon erwähnt, der Gehäuseabschnitt 14 durch geeignete Mittel an einem Herausgleiten aus dem Gehäuseabschnitt 12 gehindert ist.

Die Spindel 20 erstreckt sich über den Motor nach oben hinaus in den Gehäuseabschnitt 12 und hält am Ende einen Kolben 30, so daß eine obere Zylinderkammer 32 gebildet ist, die als Explosionskammer ausgebildet ist, damit impulsartig ein Stauchdruck aufgebaut wird. Ein geeignetes Verbrennungsmedium wird durch eine geeignete Zündvorrichtung in der Kammer 32 (nicht gezeigt) zur Explosion gebracht, um einen Stauchdruck zu erzeugen.

Die gezeigte Vorrichtung arbeitet wie folgt. Die Bedienungsperson hält das Gehäuse 10 an den Griffen 16 und führt es mit dem eingespannten Bolzen 24 gegen die Montagefläche 36. Letztere ist an den Punkten gekörnt, an denen Stifte oder Bolzen 24 angeschweißt werden sollen. Der Bolzen 24 weist seinerseits eine Spitze 42 auf, die dann in die Körnung eingesetzt wird. Der Motor 18 wird durch einen nicht gezeigten Schalter eingeschaltet und dreht mit hoher Geschwindigkeit, während die Bedienungsperson das Gehäuse 10 mit einer gewissen Kraft gegen die Montagefläche 36 andrückt. Die Feder 26 ist so ausgebildet, daß reproduzierbar ein bestimmter Reibungsdruck erzeugt werden kann. Die hierfür erforderlichen Mittel sind jedoch im einzelnen nicht dargestellt. Sie sind in Verbindung mit Bolzenschweißgeräten an sich bekannt. Das Einschalten des Motors 18 kann im übrigen auch automatisch erfolgen, nach dem der eingestellte Reibdruck erzeugt worden ist. Beispielsweise kann das Einschieben des Gehäuseabschnitts 14 in den Gehäuseabschnitt 12 um eine vorgegebene Strecke ermittelt und zum Einschalten des Motors 18 verwendet werden. Die Spindel 20 treibt mithin den Bolzen 24 mit der vorgegebenen Drehzahl an, wobei sich im Andruckbereich an der Montagefläche 36 in bekannter Weise die Erweichung der Materialien einstellt. Nach einer kurzen Zeit, die ebenfalls durch die nicht gezeigte Steuervorrichtung im Gehäuse 12 eingestellt werden kann, wird der Motor 18 ausgeschaltet und im Anschluß daran in der Zylinderkammer 32 ein explosionsartiger Stauchdruck erzeugt. Der die Spitze 42 aufweisende Bolzen 24 weist durch die Spitzenformung einen Flansch 44 auf, der auf diese Weise die mit der Montagefläche verschweißbare Fläche des Bolzens 24 vergrößert.

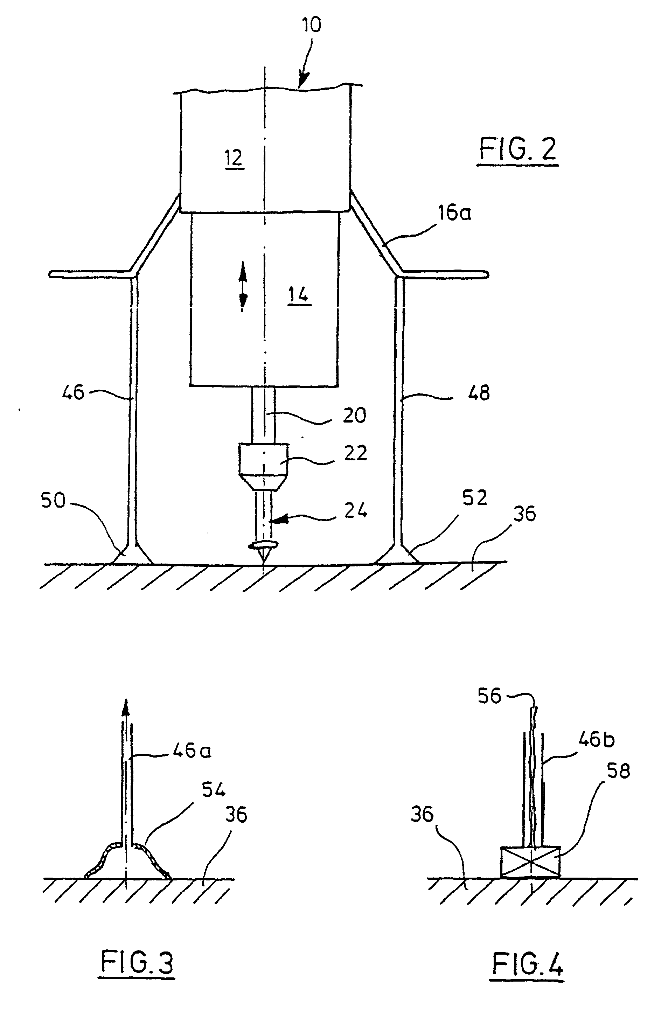

Soweit bei der Ausführungsform nach Figur 2 gleiche Teile wie in Figur 1 vorgesehen sind, werden gleiche Bezugszeichen verwendet. Man erkennt, daß nach unten gewinkelte Griffe 16a vorgesehen sind von denen sich Stäbe 46, 48 in Richtung Montagefläche 36 erstrecken. Am unteren Ende weisen die Stäbe Haftelemente 50, 52 auf, die reibend mit der Montageflache 36 in Eingriff gelangen und dadurch eine seitliche Verschiebung des Gehäuses 10 während der Reibphase verhindern.

Bei der Ausführungsform nach Figur 3 sind die Stangen 46, 48 durch Rohre 46a ersetzt, die am Ende einen Saugnapf 54 aufweisen. Im Saugnapf 54 wird während der Reibphase ein Unterdruck erzeugt, so daß die Positioniervorrichtung, wie sie in Figur 2 dargestellt ist, gegen die Montagefläche 36 gehalten wird.

Bei den Ausführungsformen nach den Figuren 1 und 2 wirkt der Stauchdruckerzeuger zwar auf die Spindel 20, der Motor 18 wird jedoch mitbewegt. In manchen Fällen kann es vorteilhaft sein, die Auswirkung einer solchen Bewegung auf den Motor 18 zu vermeiden und den Stauchdruck auf die Spindel unter Umgehung des Motors aufzubringen. Hierzu können separate Mittel vorgesehen werden, um zum Beispiel den Kolben 30 so mit der Spindel 20 in Wirkverbindung treten zu lassen, daß bei Aufbringen des Stauchdrucks der Motor 18 nicht mitbewegt wird.

In der Ausführungsform nach Figur 4 ist in der Stange 46b ein Kabel 56 hindurchgeführt für einen Magneten 58 am Ende, der in Eingriff bringbar ist mit der Montagefläche 36, zwecks Halterung der Positioniervorrichtung nach Figur 2 an der Montagefläche 36.

## Patentansprüche

1. Vorrichtung zum Schweißen von metallischen Stiften oder Bolzen an metallischen Montageflächen nach dem Reibschweißverfahren, mit
einem relativ zur Montagefläche geführten Gehäuse (10),
in dem ein Antriebsmotor (18) angeordnet ist,
der eine Spannvorrichtung (22) für die Stifte oder Bolzen (24) haltende Spindel (20) mit einer Drehzahl von 10.000 Umdrehungen pro Minute und mehr antreibt und einem im Gehäuse (10) angeordneten auf die Spindel (20) wirkenden Stauchdruckerzeuger (30),
und einem mit bei der Spindel (20) verbundenem Kolben (30), der in einem Zylinder des Gehäuses (10) geführt ist, wobei eine auf der dem Motor abgewandten Seite des Kolbens (30) liegende Zylinderkammer mit einem Fluid unter Druck beaufschlagbar ist, **dadurch gekennzeichnet, daß**
ein Elektromotor vorgesehen und die Zylinderkammer (32) als Explosionskammer ausgebildet ist.

2. Vorrichtung nach Anspruch 1, **dadurch gekennzeichnet, daß** das Gehäuse von Hand oder einem Roboter führbar ausgebildet ist.

3. Vorrichtung nach Anspruch 1, **dadurch gekennzeichnet, daß** das Gehäuse in einem Stand angebracht ist, dem die Montagefläche zugeführt wird.

4. Vorrichtung nach einem der Ansprüche 1 bis 3, bei der der Stauchdruckerzeuger (30) auf der der Spannvorrichtung (22) entgegengesetzten Seite des Motors (18) angeordnet ist.

5. Vorrichtung nach Anspruch 1 oder 2, bei der seitlich am Gehäuse (10) Griffe (16), (16a) angeordnet sind.

6. Vorrichtung nach einem der Ansprüche 1 bis 5, bei der das Gehäuse (10) zwei teleskopisch ineinander schiebbare Gehäuseabschnitte (12, 14) aufweist, die durch eine Feder (26) voneinander fort vorgespannt sind und die Feder (26) so ausgebildet und angeordnet ist, daß der Andruck des Werkstücks (24) an einer Montagefläche (36) auf einen vorgegebenen Wert einstellbar ist.

7. Vorrichtung nach Anspruch 6, bei der der Motor (18) axial fest in den der Spindel (20) zugekehrten Gehäuseabschnitt eingebaut ist.

8. Vorrichtung nach einem der Ansprüche 1 bis 6, bei der am Gehäuse (10) Positioniermittel (46, 48, 50, 52) angebracht sind, die seitlich der Spindel (20) zur Montagefläche (36) hin sich erstrecken und mit dieser haftend in Eingriff bringbar sind.

9. Vorrichtung nach Anspruch 8, bei der die Positioniermittel über Haftreibung mit der Montagefläche (36) zusammenwirken.

10. Vorrichtung nach Anspruch 8, bei der die Positioniermittel Vakuummittel (46a, 54) aufweisen zwecks Ansaugens an der Montagefläche (36).

11. Vorrichtung nach Anspruch 8, bei der die Positioniermittel Magneten (58) aufweisen zur Festlegung an der Montagefläche (36).

## Claims

1. Device for welding metallic tips or bolts on metallic mounting surfaces after the friction welding method, with
a housing (10) which is guided in relation to the mounting surface,
in which a driving motor (18) is disposed,
which drives a clamping arrangement (22) for a spindle (20) holding tips or bolts (24) with a revolution number of 10 000 revolutions per minute or more, and with a generator of pressure required for upsetting (30), disposed in the housing (10), acting on the spindle (20),
and with a piston (30), connected with the spindle (20), which is guided in a cylinder of the housing (10), a pressurised fluid being admittable to a cylinder chamber which is situated on the side of the piston (30) averted from the motor, **characterised in that**
an electric motor is provided and that the cylinder chamber (32) is constructed as an explosion chamber.

2. Device according to claim 1, **characterised in that** the housing is constructed to be operable by hand or by a robot.

3. Device according to claim 1, **characterised in that** the housing is attached in a working station to which the mounting surface is fed.

4. Device according to one of claims 1 to 3, in which the generator of pressure required for upsetting (30) is disposed on the side of the motor (18) opposite to the clamping arrangement (22).

5. Device according to claim 1 or 2, in which handles (16), (16a) are disposed laterally on the housing (10).

6. Device according to one of claims 1 to 5, in which the housing (10) has two housing parts (12, 14), telescopically slidable into each other, which are preloaded away from each other by a spring (26) and the spring (26) being constructed an disposed in a manner that the pressure of the workpiece (24) against a mounting surface (36) is adjustable to a predetermined value.

7. Device according to claim 6, in which the motor (18) is axially fixedly integrated into the housing part facing the spindle (20).

8. Device according to one of claims 1 to 6, in which positioning means (46, 48, 50, 52) are attached on the housing (10), extending laterally of the spindle (20) in direction of the mounting surface (36) and which can be adhesively brought into engagement with the same.

9. Device according to claim 8, in which the positioning means co-operate with the mounting surface (36) by static friction.

10. Device according to claim 8, in which the positioning means have vacuum means (46a, 54) for the purpose of suction on the mounting surface (36).

11. Device according to claim 8, in which the positioning means have magnets (58) for fixation on the mounting surface (36).

## Revendications

1. Dispositif pour la soudure de chevilles ou de boulons métalliques sur des surfaces de montage métalliques selon le procédé de soudure par friction, comprenant
un carter (10) guidé par rapport à la surface de montage,
un moteur d'entraînement (18) étant disposé dans le carter,
le moteur entraînant un arbre (20) comportant un dispositif de serrage (22) pour les chevilles ou boulons (24), avec une vitesse de 10 000 tours par minute et davantage, et
un générateur de pression de refoulement (30) disposé dans le carter (10) et agissant sur l'arbre (20),
et un piston (30) relié à l'arbre (20) et guidé dans un cylindre du carter (10), une chambre de cylindre située sur le côté du piston (30) opposé au moteur pouvant être alimentée par un fluide sous pression,
**caractérisé en ce qu'**un moteur électrique est prévu et que la chambre de cylindre (32) est configurée comme une chambre à explosion.

2. Dispositif selon la revendication 1, **caractérisé en ce que** le carter est configuré pour pouvoir être guidé manuellement ou par un robot.

3. Dispositif selon la revendication 1, **caractérisé en ce que** le carter est placé dans une position vers laquelle la surface de montage est amenée.

4. Dispositif selon l'une quelconque des revendications 1 à 3, dans lequel le générateur de pression de refoulement (30) est disposé sur le côté du moteur (18) qui est opposé au dispositif de serrage (22).

5. Dispositif selon la revendication 1 ou 2, dans lequel des poignées (16), (16a) sont fixées latéralement au carter (10).

6. Dispositif selon l'une quelconque des revendications 1 à 5, dans lequel le carter (10) présente deux parties de carter (12, 14) aptes à glisser l'une dans l'autre de manière télescopique et qui sont précontraintes en éloignement l'une par rapport à l'autre par un ressort (26), ce ressort (26) étant configuré et disposé de telle façon que la pression de la pièce d'oeuvre (24) sur une surface de montage (36) peut être réglée à une valeur préfixée.

7. Dispositif selon la revendication 6, dans lequel le moteur (18) est monté axialement fixe dans la partie du carter adjacente à l'arbre (20).

8. Dispositif selon l'une quelconque des revendications 1 à 6, dans lequel des moyens de positionnement (46, 48, 50, 52) sont fixés au carter (10), ces moyens s'étendant latéralement par rapport à l'arbre (20) vers la surface de montage (36) et pouvant être mis en contact par adhérence avec celle-ci.

9. Dispositif selon la revendication 8, dans lequel les moyens de positionnement coopèrent avec la surface de montage (36) par friction par adhérence.

10. Dispositif selon la revendication 8, dans lequel les moyens de positionnement comportent des moyens pour créer une sous-pression (46a, 54) afin d'aspirer la surface de montage (36).

11. Dispositif selon la revendication 8, dans lequel les moyens de positionnement comprennent des aimants (58) pour la fixation à la surface de montage (36) .
